# EUROPÄISCHE PATENTANMELDUNG

(11) **EP 2 104 209 A2**
(43) Veröffentlichungstag der Anmeldung: **23.09.2009**
(21) Anmeldenummer: 09003557.7
(22) Anmeldetag: 11.03.2009
(51) Int. Cl.: H02K 41/025, H05B 6/02

(54) **Verfahren und Vorrichtung zum berührungslosen Bewegen von elektrisch leitfähigen Elementen**

(30) Priorität: 12.03.2008 DE 102008011024
(71) Anmelder: Marthiens, Knut Olaf, 31032 Betheln (DE); Behrens, Bernd-Arno, 31177 Harsum (DE); Marthiens, Knut, 28876 Oyten (DE)
(72) Erfinder: Marthiens, Knut Olaf, 31032 Betheln (DE); Behrens, Bernd-Arno, 31177 Harsum (DE); Marthiens, Knut, 28876 Oyten (DE)

(57) **Zusammenfassung**

Für den berührungslosen, präzisen Transport elektrisch leitfähiger, beliebig dimensionierter Element wird ein Verfahren und eine Vorrichtung vorgeschlagen. Hierbei findet ein magnetischer Rückschluss durch Magnetfeldlinienemitter und einem Absorber statt, ein Wanderfeld wird erzeugt und ein symmetrisches Magnetfeld wird im zu bewegenden Element erzeugt, das in Wechselwirkung zum äußerem Magnetfeld tritt, wodurch das zu bewegende Element bewegt wird.

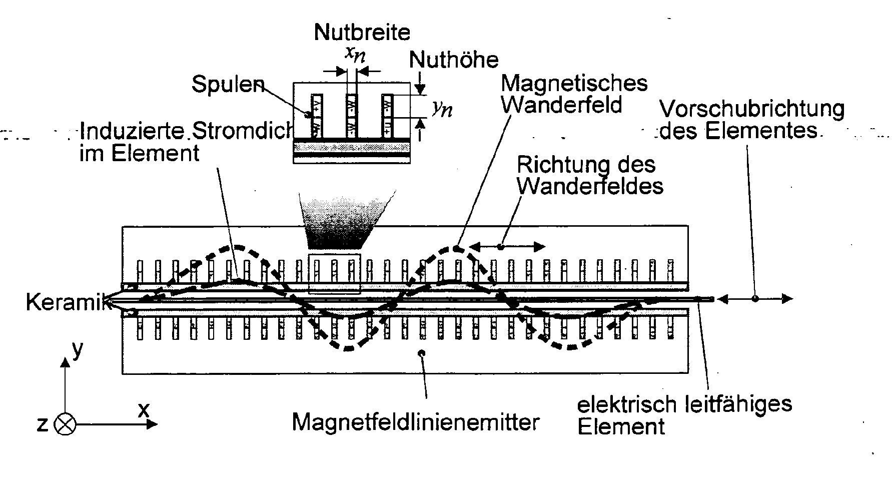

## Beschreibung

Die Erfindung betrifft eine Vorrichtung und ein Verfahren zum berührungslosen Bewegen, sowie wahlweise gleichzeitigen Erwärmen und/oder Entmagnetisieren von elektrisch- leitfähigen Elementen.

Der der Erfindung zu Grunde liegende Gedanke ist die Ausführung eines Linear- Asynchron- Elektromotor Läufers eines Linear- Asynchron-Elektromotors als magnetisches Element per se.

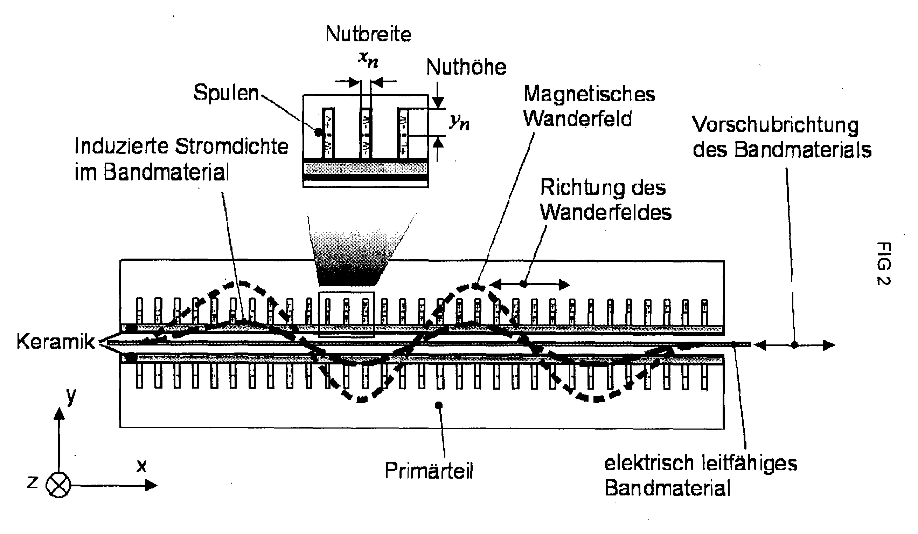

So kann jedes beliebige elektrisch-leitfähige Element als Läufer verwendet werden, da jeder stromdurchflossene Leiter ein Magnetfeld der rechten Hand Regel entsprechend aufbaut (elektrisch-leitfähiger Läufer). Durch dass sich wechselnde Magnetfeld (FIG. 2) des Primärteils des Elektromotors kann eine Relativbewegung zwischen Primärteil und Sekundärteil (Läufer) hervorgerufen werden. Hierbei gilt es zu beachten, dass es sich in der Tat nicht zwingend um einen Linear - Asynchron Motoren im herkömmlichen Sinne handeln muss. Vielmehr muss ein Primärteil lediglich in der Lage sein ein sich bewegendes Magnetfeld zu erzeugen, dass in Wechselwirkung mit dem Magnetfeld des Sekundärteils eine Relativbewegung zwischen Primär-und Sekundärteil hervorrufen kann.

Vorzugsweise wird innerhalb des zu bewegenden Elementes beim Durchgang durch die Wechselfelder ein Strom induziert, der wiederum ein eigenes, Magnetfeld aufbaut, welches dann in Wechselwirkung mit dem äußeren Magnetfeld tritt und die zu erzielende Relativbewegung zwischen Primär- und Sekundärteil hervorruft (FIG. 2).

Durch den Aufbau entsprechender Wechselfelder kann abhängig von der Bestromung (Stromstärke und Frequenz) das zu bewegende Element, insofern es ferro- oder ferrimagnetisch ist, entmagnetisiert werden. Des Weiteren können neben einer parallelen Bewegung des Primärteils zusätzlich senkrechte Bewegungen von ferromagnetischen Elementen bei entsprechender Bestromung hervorgerufen werden.

Ferner kann durch die Vorrichtung das zu bewegende Element erwärmt werden und damit im Hinblick auf dessen Gefüge gezielt behandelt werden. Weiterhin können vergleichsweise erhöhte Beschleunigungen sowie Transportgeschwindigkeiten durch die vorliegende Vorrichtung gewährleistet werden. Die bei konventionellen Transportvorrichtungen zwingend erforderlichen Klemmkräfte zwischen Rollen oder Walzenpaaren entfallen durch berührungslos angreifende Beschleunigungskräfte. Mögliche gezielte Gefügebeeinflussung des zu transportierenden Elements können so vorgenommen werden. Da ein berührungsloser Transport gewährleistet wird, ist weiterhin die Oberflächenbeschaffenheit des zu transportierenden Elements für dessen Transport von untergeordneter Bedeutung. So muss ein zu transportierendes Element nicht zusätzlich durch weitere Motoren bewegt werden.

### Stand der Technik

Im Gegensatz zu den verbreiteten rotierenden Maschinen versetzt ein Linearmotor die mit ihm verbundenen Objekte nicht in eine drehende, sondern in eine geradlinige Bewegung (Translationsbewegung).

Dabei ist grundsätzlich entweder eine asynchrone (das Magnetfeld ist nicht fest mit der Bewegung gekoppelt) oder eine synchrone Arbeitsweise möglich. Linearmotoren folgen demselben Funktionsprinzip wie ein Drehstrommotor, wobei die ursprünglich kreisförmig angeordneten elektrischen Erregerwicklungen auf einer ebenen Strecke angeordnet ist.

Der "Läufer", der im Drehstrommotor rotiert, wird beim Linearmotor von dem längs bewegten Magnetfeld über die Fahrstrecke gezogen. Die erforderliche Abstandshaltung zwischen Läufer und Linear-Wicklung wird vorzugsweise mit Rädern, Luftkissen oder durch elektromagnetisch geregeltes Schweben erfolgen.
So kann ein Linearmotor auf eine beliebige Länge gebaut werden. Für weiträumige Bewegungen (z.B. Transportantriebe) kann der Linearmotor auch in gekurvter Form ausgeführt werden. So gibt es auch Linearschrittmotoren. Linearmotoren erlauben die direkte Erzeugung linearer Bewegungen ohne Getriebe. Anwendungsgebiete sind Werkzeugmaschinen, innerbetriebliche Fördersysteme sowie spurgebundene Fahrzeuge.

Im Betrieb entsteht anstelle des Drehfelds bei rotierenden Maschinen ein Wanderfeld, dessen Geschwindigkeit von der speisenden Frequenz und der Polteilung abhängt. Im Betrieb entwickelt der Linearmotor eine Schubkraft und eine Geschwindigkeit. Diese Größen entsprechen dem Drehmoment und der Drehzahl drehender Maschinen und bestimmen zusammen die Leistung. Eine einseitige Ausführung bedarf eines magnetischen Rückschlusses unterhalb einer Reaktionsschiene und hat außerdem den Nachteil, dass im Betrieb hohe vertikale Anziehungskräfte wirken würden, deren Höhe die Vortriebskraft deutlich übersteigt.

Vorzugsweise werden dementsprechend doppelseitige Bauformen gewählt; infolge der Symmetrie ist ein solches System theoretisch frei von Vertikalkräften. Für berührungsfreie Antriebe von Schienenfahrzeugen bieten sich Langstator- Synchronmotoren an. Dabei wird die Antriebsleistung der im Fahrweg befindlichen Wicklung zugeführt, während das Fahrzeug nur den Erregerteil enthält. Die Speisung eines Langstators erfolgt über Frequenzumrichter in festen Streckenabschnitten. Neben der Antriebsfunktion muss auch Tragen und Führen des Fahrzeugs sichergestellt werden. Ein Langstator im Fahrweg enthält eine Drehstrom-Einlochwicklung; ein Erregerteil mit ausgeprägten Polen ist hierbei so angeordnet, dass das Fahrzeug von den Magnetfeldkräften getragen wird. Der Luftspalt wird auf etwa 10mm geregelt. Nuten in den Polschuhen nehmen die Wicklung des sog. Lineargenerators auf, der zur berührungsfreien Übertragung der Erregerleistung und der Bordversorgung dient. Führmagnete halten hierbei das Fahrzeug seitlich in der Spur. Auch im Bereich der Transport- sowie Positionierungstechnik werden Linear- Asynchron Elektromotoren eingesetzt. Jedem der bisherig entwickelten Transportvorrichtungen ist jedoch der Umstand zu Eigen, dass zum Transport eines jeweiligen Elements ein solches auf entsprechenden Schlitten und damit mittelbar durch ein magnetisches Feld transportiert werden oder aber Läufer und Stator zwingend aktive Magneten sind.

Im Bereich der Medizintechnik werden hierdurch z.B. zur Positionierung von Proben entsprechende Schlitten durch Asynchronschrittmotoren bewegt. Konventionelle, auf Rollen- sowie Walzentransport basierende Transportvorrichtungen wiederum können, bedingt durch ihre Schlupfneigung, nur begrenzte Vorschubgeschwindigkeiten erreichen. Dies geht zudem zwingend mit dem Aufbringen hoher Klemmkräfte zwischen Rollen oder Walzen einher, was wiederum die Oberflächen oder das Gefüge des zu transportierenden Werkstücks ungewollte beeinträchtigen kann.

Im Zuge der Verwendung notwendiger Schmiermittel, Öle Fette oder Lacke erhöht sich die Schlupfneigung zudem vergleichsweise.
Hinzu kommt der Umstand, dass als Linearmotoren bekannte ausgeführte Fördervorrichtungen im Hinblick auf Förder- sowie Beschleunigungskräfte bedingt durch ihre Feldlinieführung, die kein Maximum an Vorschubkraft zur Folge hat eine gewünschte Präzision vermissen lassen.

So zeigt z.B. DE 1963529 eine Vorrichtung zum Fördern von elektrisch leitenden Gegenständen.

Diese Lehre offenbart eine Vorrichtung zum Fördern von elektrisch leitenden, mindestens eine ebene Grundfläche aufweisenden Gegenständen mit linearen Induktionsmotoren und mit einer Einrichtung zum Steuern der Erregung der linearen Induktionsmotoren, dass über den gesamten Förderbereich eine Mehrzahl von linearen Induktionsmotoren nebeneinander angeordnet ist, deren jeder getrennt steuerbar ist. Nachteilig an dieser Lehre ist, dass die Feldlinien aus einem, unter dem zu bewegenden Element sich befindenden Magnetfelderzeuger austreten, das zu bewegende Element im Idealfall senkrecht durchdringen und im Falle des Vorliegens eines lediglich elektrisch leitfähigen, nicht aber ferro- oder ferri- magnetischen, zu bewegenden Elements, im Idealfall senkrecht aus dem zu bewegenden Element austreten, um anschließend durch die Luft geführt zu werden, um danach im Idealfall wiederum senkrecht das zu bewegende Element zu durchdringen und in den anderen Pol eines Linearmotors geführt werden. Dies hätte die Verursachung nicht unerheblicher Vertikalkräfte sowie eine weitgehende Feldlinienführung durch die Luft zur Konsequenz, was die Beschleunigungseigenschaften und damit Präzision der Vorrichtung erheblich beeinträchtigen würde. Würde man hingegen hierbei eine Beschränkung des Transports auf ferro- oder ferrimagnetische Werkstoffe abstellen, wäre die Vorrichtung nicht geeignet, lediglich elektrisch leitfähige Elemente präzise zu bewegen.

Weiterhin zeigt EP 0082356 eine Vorrichtung zum Fördern ferromagnetischer Werkstücke.
EP 0082356 weist entlang eines Förderweges Haltemagnete auf, die entweder nacheinander magnetisiert und entmagnetisiert werden oder als Primärteil eines mehrphasigen linearen Induktionsmotors dienen, wenn die hintereinander liegenden Wicklungen von den Phasen einer Mehrphasen-Wechselstromquelle gespeist werden. Außerdem wird der für die zu übertragende Kraft wichtige Luftspalt zwischen den Magnetpolen und dem Werkstück entweder mechanisch durch Rollkörper oder durch die einstellbare Haltekraft einander gegenüberliegender Haltemagnete, zweier symmetrisch zueinander angeordneter Vorrichtung gewährleistet.
Dieser Lehre folgend platziert man zur Egalisierung vertikaler Anziehungskräfte einen Haltemagnet auf der gegenüberliegend Seite eines Elektromagneten.
So bezieht sich diese Lehre lediglich auf den Transport ferromagnetischer Werkstücke unter Ausnutzung von Magnetkräften, nicht aber unter Ausnutzung zeitlich veränderbarer magnetischer Felder, die wiederum ein Magnetfelder erzeugen, welche in Wechselwirkung mit Magnetkräften treten, sodass eine entsprechende Anordnung von Magneten nicht zur Optimierung des magnetischen Rückschlusses erfolgt, sondern zur Egalisierung oder Hervorrufung vertikaler Kräfte.
So wird zum einen, eine Optimierung des magnetischen Rückschlusses durch Magnetfeldlinienemittter und Absorber, sowie eine Lehre über die Erzeugung und Beschaffenheit des Magnetfeldes nicht offenbart.
Die Schaffung einer Vorrichtung bestehend aus zwei gegenüberliegenden Magneten hat somit nicht zwingend eine Optimierung des magnetischen Rückschlusses und der Magnetkräfte zur Folge. Beiden Lehren ist nicht die Optimierung einer Vorschubkraft in Abhängigkeit der Transport- und Magnetfeldgeschwindigkeit entnehmbar. So lösen beide Lehren nicht die Problematik, elektrisch leitfähige beliebig, dimensionierbare Elementen, bei denen Ströme in einem zu bewegenden Element durch zeitlich veränderbare magnetische Felder hervorgerufen werden, diese wiederum Magnetfelder erzeugen und in Wechselwirkung mit äußeren Magnetfeldern treten möglichst präzise berührungslos zu transportieren.

### Aufgabe

Folglich liegt der Erfindung die Aufgabe zugrunde ein Verfahren, sowie eine Vorrichtung zu schaffen, wodurch elektrisch leitfähige Elemente, möglichst präzise berührungslos bewegt werden können.

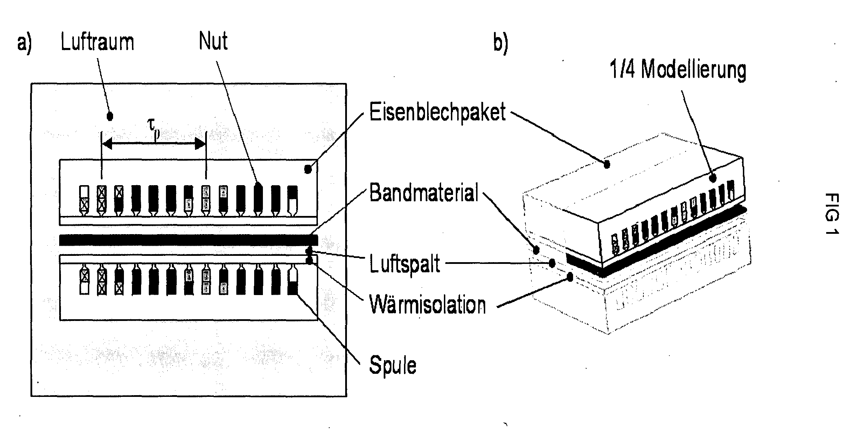

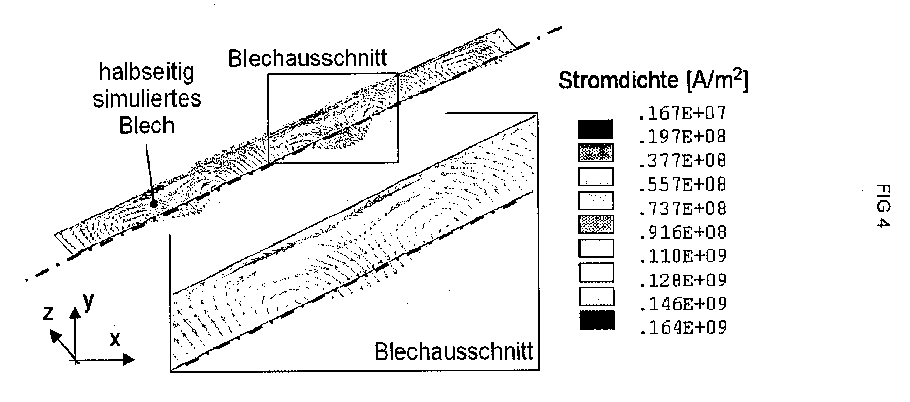

Die Aufgabe wird nach einem ersten Aspekt durch ein Verfahren zum berührungslosen Bewegen von elektrisch leitfähigen, in Förderichtung beliebig dimensionierten Elementen, bei dem magnetische Felder in einem zu bewegenden Element durch zeitlich veränderbare magnetische Felder hervorgerufen werden und diese in Wechselwirkung mit äußeren Magnetfeldern treten, bei dem ein zumindest teilweise magnetisch geschlossener Kreis, aus wenigstens einem magnetischen Rückschluss, wenigsten einem Magnetfeldlinienemitter und wenigstens einem Magnetfeldlinienabsorber besteht, wenigstens ein Wanderfeld erzeugt wird und wenigstens ein symmetrisches Magnetfeld in wenigstens einer räumlichen Dimension im zu bewegenden Element erzeugt wird gelöst. So sind besonders eine Optimierung des magnetischen Rückschlusses und die Erzeugung eines wenigstens in eine räumliche Dimension symmetrischen Magnetfeldes im zu bewegenden Element für die Gewährleistung eines präzisen Transportes von Nöten. Ein entsprechendes Magnetfeld würde vorzugsweise ellipsenförmig, symmetrisch ausgeformt werden (Fig 4).
Ein solches Verfahren kann dadurch realisiert werden, dass aus einem unterhalb eines zu transportierenden Elements sich befindenden Magnetfeldlinienemitters (FIG. 1) Magnetfeldlinien in einen minimalen Luftspalt austreten, in einem bestimmten Winkel das zu transportierende Element durchdringen und dort einen Strom induzieren, anschließend wiederum in einen Luftspalt treten, hiernach in einen dem unterhalb positionierten Magnetfeldemitter gegenüber positionierten Magnetfeldemitter eindringen, bis zum gegengepolten Ende des Magnetfeldemitter rückgeführt werden, wo die Magnetfeldlinien wiederum in einem Luftspalt das zu bewegende Element in einem entsprechenden Winkel durchdringen, um anschließend in den unterhalb des zu transportierenden Elements sich befindenden Magnetfeldemitter, der nunmehr zum Absorber wird, den magnetischen Fluss zu schließen. Dieses Magnetfeld erzeugt dann durch die Wechselwirkung mit einem äußeren Wanderfeld, eine Vorschubbewegung des zu bewegenden Elements.
Vorteilhaft ist hierbei die Optimierung des magnetischen Rückschlusses durch eine Minimierung der im Luftspalt zurückgelegten Strecke. Hierdurch können vor dem Hintergrund einer Kraftmaximierung durch magnetischen Kurzschluss hohe Beschleunigungskräfte aufgebracht werden, da die im Luftspalt zurückgelegte Strecke minimiert wird.

Wird nunmehr ein Wanderfeld durch Emitter und Absorber hervorgerufen und hierbei durch den entsprechend beschriebene Magnetlinienverlauf die Größe des magnetischen Widerstandes minimiert, könnten, bedingt durch eine Maximierung der Magnetkräfte, präziseste Bewegungen der zu bewegenden Elemente vorgenommen werden.
Werkzeugmaschinen können schrittweise, sowie endlos mit Werkstücken versorgt werden. Kraftvolle Beschleunigungen sowie hohe Fördergeschwindigkeiten sind gewährleistbar.
Aber auch in der Medizintechnik könnten Positioniervorrichtungen geschaffen werden, da durch die Maximierung der Vorschubkräfte eine hohe Präzision realisiert werden kann.
Ebenso können frisch beschichtete Elemente berührungslos über eine beliebige Strecke transportiert werden, ohne dass ein Kontakt mit anderen Fördereinrichtungen erforderlich ist. Im Zuge eines solchen Fertigungsprozesses können weitergehende Bearbeitungsschritte an dem Werkstück vorgenommen werden, ohne die frisch aufgebrachte Beschichtung oder den frisch aufgetragenen Lack in Mitleidenschaft zu ziehen. Bedingt durch die beschriebenen Magnetfeldlinien ist es damit möglich beliebig lang ausgeführte Elemente zu bewegen.
So können durch die beschriebene Konstellation über das zu bewegende Element innerhalb des Wanderfeldes mehrere gegensinnig gerichtete magnetische Pole aufeinanderfolgend hervorgerufen werden, die sich über das zu bewegende Element mit einer Geschwindigkeit v_{mag} bewegen.

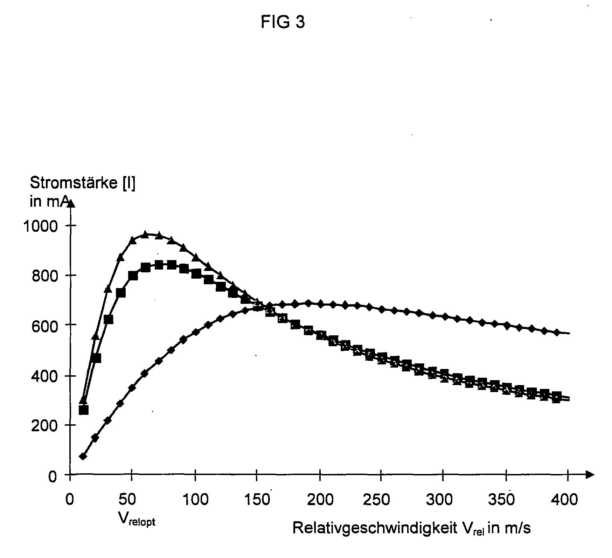

Hierdurch können zum Beispiel Endlosbleche präzise auch nach Durchgang durch die Erregerfelder befördert werden, da sie werkstoffbedingt endlos mit dem gerade beschleunigten Teil verbunden sind.
Das zu fördernde Element wiederum wird sich mit einer Geschwindigkeit v_{för} bewegen, welche kleiner oder gleich v_{mag} ist. Es wird sich somit eine Relativgeschwindigkeit vᵣₑₗ zwischen Magnetfeldgeschwindigkeit und Transportgeschwindigkeit des zu transportierenden Elementes einstellen. Das im zu transportierenden Element erzeugte, magnetische Feld ist bei einer Relativgeschwindigkeit v_{för}=0, bedingt durch den Mangel an Induktion, gleich Null, was zur Folge hat, dass die Vorschubkraft ebenfalls gleich Null ist. Optimal ist ein gleichmäßig über ein, vorzugsweise bandförmiges, zu bewegendes Element verteiltes Magnetfeld, das über ein Maximum an Feldliniendichte verfügt, da hierdurch ein Maximum an Vorschubkraft erzeugt wird. Durch die Bewegung des zu transportierenden Elementes, gewinnt das durch den induzierten Strom verursachte Magnetfeld an Feldliniendichte. Im Idealfall ist es dann homogen und symmetrisch mit maximaler Feldliniendichte vorzugsweise die Form einer Ellipse aufweisen (FIG 4). In einer Zwischenstufe würde das Magnetfeld vorzugsweise ebenfalls die Form einer gestauchten Ellipse annehmen, wobei die Feldliniendichte in Abhängigkeit der Relativgeschwindigkeit ansteigen wird, womit gleichzeitig auch die Vorschubkraft steigt (FIG 3).

In solchen Fällen wird sich bei einer Relativgeschwindigkeit vᵣₑₗₒₚₜ ein Maximum an Vorschubkraft einstellen, da in diesem Fall die induzierte Stromdichte ebenfalls maximiert ist Iₘₐₓ. (FIG 3).
Bedingt durch die Bewegung eines vorzugsweise bandförmigen, zu transportierenden Elementes und eine durch die Bewegung hervorgerufene Verstärkung des Magnetfeldes, wird somit ein Maximum an Vorschubkraft zur Verfügung gestellt. Wird die Relativgeschwindigkeit hingegen größer als vᵣₑₗₒₚₜ, verringert sich die induzierte Stromdichte, was eine Abnahme des verursachten Magnetfeldes zur Folge hat, so dass der Feldlinienverlauf eines vorzugsweise bandförmigen, zu transportierendes Element nicht optimal ist (FIG 3).
Diese Erkenntnis ist von mehreren Umständen abhängig:
Beschaffenheit des Emitters und Absorbers, Werkstoff und Dimensionierung des zu transportierenden Elements, Feldstärken und Luftspalt.
Bedingt durch die Induzierung elektrischer Ströme, im Inneren des zu bewegenden Elements, können diese zudem gleichzeitig erwärmt werden. Bleche oder Brammen, die einer Wärmebehandlung, sowie eines Transports nach einem Stranggussverfahren bedürfen, können unter Verwendung der vorliegenden Erfindung gleichzeitig transportiert und wärmebehandelt werden.
Da eine beabsichtigte Induktion zwingend an einer Verwendung eines Wechelstromes gebunden ist, würde jedes magnetisierte Element im Zuge eines Durchlaufens der Erregerfelder entmagnetisiert werden.
So könnte im Bereich der Zerspanungstechnik dafür Sorge getragen werden, dass vor einem Zerspanungsprozess die Werkstücke entmagnetisiert werden, was ein Haftenbleiben von Spänen am Werkzeug ausschließen würde.
Gemäß einem zweiten Aspekt löst die Erfindung das Problem durch eine Vorrichtung zum berührungslosen Bewegen von elektrisch leitfähigen, in Förderrichtung beliebig dimensionierten Elementen, welche ein magnetisches Feld im Element erzeugt und hierdurch eine Relativbewegung zwischen zu bewegenden Element und Vorrichtung verursacht, die aus wenigstens einem Feldlinienemitter und wenigstens einem gegenüberliegenden Feldlinienabsorber besteht.
So führt das Gegenüberstehen gegengerichteter Pole bei den Emittern und Absorbern dazu, dass der zu induzierende Strom im Werkstück gleichmäßig über das zu bewegende Element verteilt wird und hierdurch ein symmetrisches Magnetfeld erzeugt, das in Wechselwirkung mit dem von außen erzeugten Magnetfeld eine Maximierung der Vorschubkräfte zur Folge hat. So können zum Beispiel ebenso zwei, vier, sechs, acht Emitter und Absorber verwendet werden, womit eine Präzisierung vertikaler Platzierungen gewährleistet wird. Gerade durch die gegenüberliegende Anordnung von Feldlinienemitter- und Absorber kann ein möglichst widerstandsloser Magnetfluss gewährleistet werden was eine Steigerung der Vorschubkraft zur Folge hat. Eine besonders effektive Ausführungsform ist hingegen eine parallele Anordnung von Emitter und Absorber, da eine optimale magnetischer Kraft durch eine senkrechte Anordnung zwischen Feldlinien und zu bewegendem Element erzielt werden kann. Außerdem kann auch eine "stufige oder versetzte Bauform einen entsprechenden Transport gewährleisten werden. Aber auch eine stetige oder sprunghafte Abstandserweiterung zischen Emitter und Absorber sind als Ausführungsform in Betracht zu ziehen.

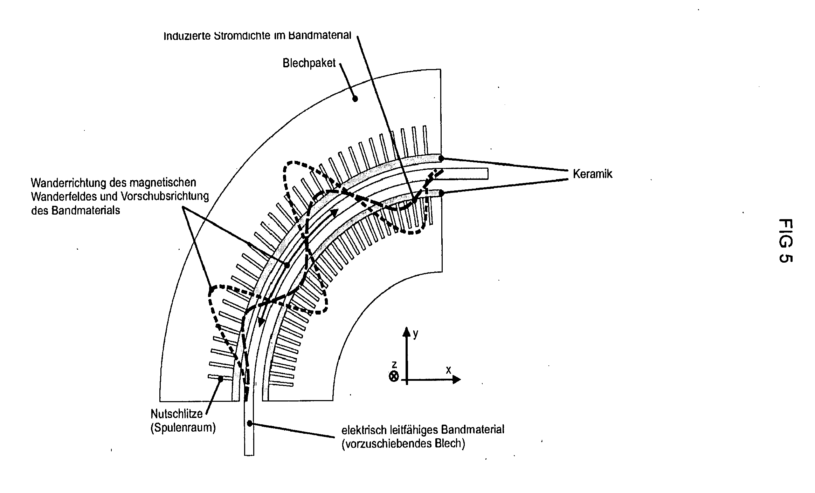

Eine weitere Ausführungsform kann durch gekrümmte Feldlinienemitter und Absorber beschrieben werden (FIG 5).
Vorteil einer solchen Ausführungsform ist die Möglichkeit vorgekrümmte Bleche durch entsprechende Bestromungen vertikal zu glätten, sowie einer Vorkrümmung während des Beschleunigungvorgangs zu begegnen. Vorzugsweise können diese Feldlinienabsorber identisch gekrümmt sein, und im identischen Abstand zueinander angeordnet sein.
Auch kann man durch eine Trennschicht Magnetfeldlinienemitter und Magnetfeldlinienabsorber vom zu transportierenden Element trennen. Dies hat den Vorteil, dass Beschädigungen von Emitter und Absorber durch das zu transportierende Element verhindert werden können.
Von Vorteil ist es als Trennschicht eine Keramik zu verwenden, welche von den magnetischen Feldlinien ungehindert passieren werden kann.
Eine solche Trennschicht kann thermisch sowie mechanisch unempfindlich ausgeführt werden, womit sie gleichzeitig Emitter und Absorber thermisch, sowie mechanisch vom zu transportierenden Element trennt und damit schützen kann.

Selbstverständlich kann man Magnetfeldlinienemitter und Magnetfeldlinienabsorber als Elektromagnete ausführen, wodurch eine vergleichweise einfache Erzeugung eines magnetischen Wanderfeldes gewährleistbar ist, da eine entsprechende phasenverschobene Bestromung vorgenommen werden kann. Bedingt durch die Ausbildung von Emitter und Absorber kann im zu bewegenden Element, über das Element gleichmäßig verteilt ein Strom induziert werden, der wiederum bedingt durch seine Gleichmäßigkeit ein symmetrisches Magnetfeld hervorruft, was, bedingt durch seine Symmetrie in Wechselwirkung mit dem anliegenden Wanderfeld eine Reduzierung von Blindströmen zur Folge hat, was wiederum eine Erhöhung der Vorschubskraft zur Folge hat. Zu verwendende Blechpakete können vorzugsweise mit dreisträngigen (u, v, w,) gesehnten Zweischichtwicklungen ausgeführt werden (FIG. 2)
Die den Spulen und Blechpaketen zugewandten Innenwände der Vorrichtungen können als nichtleitendes, wärmebeständiges Material ausgeführt werden. Zu beachten ist, dass Emitter und Absorber nicht zwingend ortsgebunden ausgeführt sein müssten, aber könnten, was eine Ausführungsform als Stator zur Folge hätte. Im Folgenden wird die Erfindung anhand von Beispielen und zugehörigen Abbildungen näher erläutert. Dies dient allein der Veranschaulichung der Erfindung ohne Beschränkung der Allgemeinheit.

### FIG 1

Zeigt einen Querschnitt durch eine Transportvorrichtung bei der Emitter und Absorber als Elektromagneten, bestehend aus Eisenblechpaketen und Spulen, ausgeführt sind. Zwischen beiden ist das Bandmaterial angeordnet. Das Bandmaterial wird durch eine Wärmeisolation von Emitter und Absorber getrennt.

### FIG 2

Zeigt einen Querschnitt durch die Transportvorrichtung mit Stromdichten-und Wanderfeldverlauf bei der Emitter und Absorber ebenfalls als Elektromagnete ausgeführt sind. Ein elektrisch leitfähiges Bandmaterial wird in Vorschubrichtung bewegt. Eine Keramik trennt das Bandmaterial von dem Primärteil (Emitter/Absorber)
Die jeweiligen Polungen (-W/+V; -W/-W;+U/-W) sind einem Ausschnitt entnehmbar. Die Anzahl der Nuten beträgt N=31 Nuten. Die Nutbreite xₙ beträgt 6 mm und für die Nuthöhe yₙ gelten 12,5 mm. Die Länge des Absorbers und Emitters beträgt 660mm.
Bei einer Bestromung mit einem Wechselstrom von 10A /mm² bei einer Frequenz von 240 Hz wird in einem bandförmigen Stahl-Blech mit den Abmaßen 100mm x 1 mm ein elektrisches Strom von 950mA erzeugt. Dieser Strom ruft eine magnetische Flussdichte von 0,7 Tesla hervor.
Die Magnetfeldgeschwindigkeit liegt dabei bei 100 m/s . Die Transportgeschwindigkeit liegt dabei bei 0,5 m/s. Somit besteht eine Relativgeschwindigkeit in Höhe von ca. 99,5 m/s. Die Vorschubkraft hat hierbei eine Größe von 700 N.

### FIG 3

Zeigt das Verhältnis zwischen Relativgeschwindigkeit, die sich aus Magnetfeldgeschwindigkeit und Transportgeschwindigkeit ergibt und der induzierten Stromstärke. Die aus Dreiecken bestehende Kurve beschreiben dabei die Eigenschaften einer Transportvorrichtung mit der Bleche mit einer Blechdicke von 1 mm, einer Breite von 100mm und einer Einwirklänge von 660mm bewegt werden.
Die aus Quadraten bestehende Kurve beschreibt die Eigenschaften einer Transportvorrichtung bei einer Blechdicke von 0,75mm, einer Breite von 100 mm und einer Einwirklänge von 660mm besitzt.
Die aus auf der Spitze stehenden Quadraten bestehende Kurve beschreibt die Eigenschaften einer Transportvorrichtung bei einer Blechdicke von 0,5mm , einer Breite von 100mm und einer Einwirklänge von 660 mm

### FIG 4

Zeigt eine Magnetfeld- und Magnetdichteverteilung über einem zu transportierenden Blech.

### FIG 5

Zeigt eine Ausführungsform, bei der Emitter und Absorber ebenfalls als Elektromagnete ausgeführt sind. Im Gegensatz zu den vorherigen Ausführungsformen sind sie hierbei allerdings identisch gekrümmt und beabstandet. Durch eine Ausführung als Emitter und Absorber wird ebenfalls ein symmetrisches Magnetfeld im elektrisch leitfähigen Bandmaterial erzeugt. Eine gekrümmte Keramik trennt hierbei entsprechend der vorherigen Ausführungen Emitter und Absorber von Bandmaterial.

## Patentansprüche

1. Anspruch Verfahren zum berührungslosen Bewegen von elektrisch leitfähigen, in Förderrichtung beliebig dimensionierbaren Elementen, bei dem Ströme in einem zu bewegenden Element durch zeitlich veränderbare magnetische Felder hervorgerufen werden, diese wiederum Magnetfelder erzeugen und in Wechselwirkung mit äußeren Magnetfeldern treten,
**dadurch gekennzeichnet, dass**
a) ein zumindest teilweise magnetisch geschlossener Kreis, aus wenigstens einem magnetischen Rückschluss, wenigsten einem Magnetfeldlinienemitter und wenigstens einem Magnetfeldlinienabsorber besteht und
b) wenigstens ein Wanderfeld erzeugt wird und
c) wenigstens ein symmetrisches Magnetfeld in wenigstens einer räumlichen Dimensionen im zu bewegenden Element erzeugt wird.

2. Anspruch Verfahren nach dem vorhergehenden Anspruch **dadurch gekennzeichnet dass,**
in dem zu bewegende Element, innerhalb des Wanderfeldes mehrere gegensinnig gerichtete magnetische Pole aufeinanderfolgend hervorgerufen werden.

3. Anspruch Verfahren nach einem der vorhergehenden Ansprüche **dadurch gekennzeichnet dass**, eine Relativgeschwindigkeit vᵣₑₗ zwischen Fördergeschwindigkeit des zu transportierenden Elements und der Magnetfeldgeschwindigkeit besteht.

4. Anspruch Verfahren nach einem der vorhergehenden Ansprüche **dadurch gekennzeichnet dass**, eine optimale Relativgeschwindigkeit vᵣₑₗₒₚₜ zwischen Fördergeschwindigkeit des zu transportierenden Elements und Magnetfeldgeschwindigkeit besteht, bei der ein elektrischer Strom Iₘₐₓ im transportierenden Element induziert wird.

5. Anspruch Verfahren nach einem der vorhergehenden Ansprüche **dadurch gekennzeichnet dass**, eine Relativgeschwindigkeit vᵣₑₗₒₚₜ zwischen Fördergeschwindigkeit eines zu transportierenden bandförmigen Elements und Magnetfeldgeschwindigkeit besteht, bei der ein maximaler Strom Iₘₐₓ induziert wird.

6. Anspruch Verfahren nach einem der vorhergehenden Ansprüche **dadurch gekennzeichnet dass**, das zu bewegende Element gleichzeitig erwärmt wird.

7. Anspruch Verfahren nach einem der vorhergehenden Ansprüche **dadurch gekennzeichnet dass**, das zu bewegende Element entmagnetisiert wird.

8. Anspruch Vorrichtung zum berührungslosen Bewegen von elektrisch leitfähigen, in Förderrichtung beliebig dimensionierten Elementen, welche ein magnetisches Feld im Element erzeugt und hierdurch eine Relativbewegung zwischen zu bewegenden Element und Vorrichtung verursacht, **adurch gekennzeichnet, dass** sie aus wenigstens einem Magnetfeldlinienemitter und wenigstens einem gegenüberliegenden Magnetfeldlinienabsorber besteht.

9. Anspruch Vorrichtung nach dem vorhergehenden Anspruch **dadurch gekennzeichnet, dass**
Magnetfeldlinienemitter und Magnetfeldlinienabsorber teilweise parallel zueinander angeordnet sind.

10. Anspruch Vorrichtung nach einem der vorhergehenden Ansprüche **dadurch gekennzeichnet, dass** Magnetfeldlinienemitter und Magnetfeldlinienabsorber teilweise identisch gekrümmt sind.

11. Anspruch Vorrichtung nach einem der vorhergehenden Ansprüche **dadurch gekennzeichnet, dass** Magnetfeldlinienemitter und Magnetfeldlinienabsorber teilweise identisch gekrümmt und beabstandet sind.

12. Anspruch Vorrichtung nach einem der vorhergehenden Ansprüche **dadurch gekennzeichnet, dass** das zu bewegende Element durch eine Trennschicht von Magnetfeldlinienemitter und Magnetfeldlinienabsorber getrennt wird.

13. Anspruch Vorrichtung nach dem vorhergehenden Anspruch **dadurch gekennzeichnet, dass**
die Trennschicht eine Keramikschicht ist

14. Anspruch Vorrichtung nach einem der vorhergehenden Ansprüche **dadurch gekennzeichnet, dass** Magnetfeldlinienemitter und Magnetfeldlinienabsorber Elektromagneten sind.

15. Anspruch Vorrichtung nach einem der vorhergehenden Ansprüche **dadurch gekennzeichnet, dass** Magnetfeldlinienemitter und Magnetfeldlinienabsorber Statoren sind.
